# EUROPEAN PATENT APPLICATION

(11) **EP 3 031 952 A1**
(43) Date of publication of application: **15.06.2016**
(21) Application number: 14834499.7
(22) Date of filing: 11.06.2014
(51) Int. Cl.: C23C 22/34, C23C 28/00, F02F 11/00, F16J 15/10, F16J 15/12

(54) **(NITRILE RUBBER)-METAL-LAMINATED GASKET MATERIAL**

(30) Priority: 09.08.2013 JP 2013165707
(71) Applicant: NOK Corporation, Tokyo 105-8585 (JP)
(72) Inventor: TANAKA Nobuaki, Nihonmatsu-shi Fukushima 964-0811 (JP); SATO Takeshi, Nihonmatsu-shi Fukushima 964-0811 (JP); ABE Katsumi, Fujisawa-shi Kanagawa 251-0042 (JP)
(74) Representative: Beckmann, Claus
(86) International application number: PCT/JP2014/065463
(87) International publication number: WO 2015/019700

(57) **Abstract**

A nitrile rubber-metal laminated gasket material comprising a surface-treating agent layer, an adhesive layer, and a rubber layer, which are sequentially laminated on a metal plate, wherein the surface-treating agent layer is formed using a surface-treating agent that is free from chromium and comprises of (A) a urethane resin or phenolic resin, (B) a silicon-containing compound, and (C) a fluorine-free zirconium compound or fluorine-free titanium compound as essential components. The nitrile rubber-metal laminated gasket material has excellent LLC resistance and oil resistance under high temperature, although it uses a surface-treating agent for metal, which is free from chromium and fluorine.

## Description

### TECHNICAL FIELD

The present invention relates to a nitrile rubber-metal laminated gasket material, and more particularly to a nitrile rubber-metal laminated gasket material suitable to use for engine cylinder head gaskets, etc.

### BACKGROUND ART

Mild steel and stainless steel are mainly used as metallic materials for engine cylinder head gasket materials for which water resistance, LLC (long life coolant) resistance, and heat resistance are required. However, when a vulcanizing adhesive is directly applied to such a metallic material to bond the metallic material to rubber, liquid resistant adhesion durability is poor. When this rubber-metal laminated plate is subjected to an dipping test in which the plate is dipped in water, LLC, etc., adhesive peeling occurs. Therefore, rubber-metal laminated gasket materials used are those obtained by surface-treating SPCC steel plates, SUS steel plates, etc., followed by vulcanization bonding of various rubbers via adhesives.

As surface treatment for improving the adhesion between a metal plate and rubber, for example, zinc phosphate treatment, iron phosphate treatment, etc. are used. In these treatments, a degreased steel plate is dipped in an acidic chemical solution to form an insoluble film on the steel plate, thereby ensuring rust prevention and adhesion to an adhesive. However, these treatments had the following problems: sludge (industrial waste) was generated at the stage of forming a film; it was necessary to always supply chemical agents because chemical components were reduced due to the reaction; and the cost was high.

The present applicant has previously proposed improving resistance to water, LLC, etc., by performing coating type chromate treatment on stainless steel as a pretreatment before a vulcanizing adhesive is applied (Patent Documents 1 and 2). However, the coating type chromate treatment, which includes Cr⁶⁺ ions, is not preferable in terms of environmental protection.

Moreover, as a method that does not use zinc phosphate, iron phosphate, chromium, etc., Patent Document 3 has proposed a surface treating agent containing an organic resin, silica, and titanium compound or zirconia compound derived from fluoride. However, since this surface treating agent contains fluorine, defluorination of wastewater is necessary, thus requiring complex facilities.

In contrast, Patent Document 4 has proposed a fluorine-free surface treating agent as a modified version of the above surface treating agent. However, sufficient adhesion cannot be obtained in severe use environments such as for cylinder head gasket etc., which is exposed to high temperature LLC vapor.

### PRIOR ART DOCUMENTS

### PATENT DOCUMENTS

Patent Document 1 : JP-A-2000-006307
Patent Document 2 : JP-A-11-221875
Patent Document 3 : JP-B-5050316
Patent Document 4 : WO2011/002040
Patent Document 5 : JP-A-7-165953

### OUTLINE OF THE INVENTION

### PROBLEM TO BE SOLVED BY THE INVENTION

An object of the present invention is to provide a rubber-metal laminated gasket material that uses a metal surface-treating agent free from any of chromium and fluorine, and that has excellent LLC resistance and oil resistance at high temperatures.

### MEANS FOR SOLVING THE PROBLEM

The object of the present invention can be attained by a nitrile rubber-metal laminated gasket material comprising a surface-treating agent layer, an adhesive layer, and a rubber layer, which are sequentially laminated on a metal plate, wherein the surface-treating agent layer is formed using a surface-treating agent that is free from chromium and comprises of (A) a urethane resin or phenolic resin, (B) a silicon-containing compound, and (C) a fluorine-free zirconium compound or fluorine-free titanium compound as essential components.

### EFFECT OF THE INVENTION

The nitrile rubber-metal laminated gasket material of the present invention is using a metal surface-treating agent free from any of chromium and fluorine, and exhibits the following effects. For example, adhesion peeling does not occur in a heat resistance test method even in LLC, oil, moreover in the atmosphere in consideration of the actual use environment of engine cylinder head gaskets, and excellent LLC resistance, oil resistance and heat resistance are exhibited. Further, due to the use of a fluorine-free surface treating agent, there is no need to remove fluorine from wastewater. In addition, surface treatment is performed by simply applying a prepared chemical agent to form a film, rather than by forming a film by a chemical reaction with a stainless steel plate, as in zinc phosphate treatment; thus, this contributes to an excellent effect that no sludge is formed.

### EMBODIMENTS FOR CARRYING OUT THE INVENTION

As the metal plate, mild steel, a stainless steel plate, aluminum, aluminum die cast, or the like is used. Examples of stainless steel plates include SUS301, SUS301H, SUS304, SUS430, and the like. For gasket applications, the plate thickness is generally about 0.1 to 2 mm. A surface treating agent that is free from chromium and comprises of (A) a urethane resin or phenolic resin, (B) a silicon-containing compound, and (C) a fluorine-free zirconium compound or fluorine-free titanium compound as essential components is applied to such a metal plate. In this case, the metal plate is preferably used after surface roughening and alkaline degreasing.

Urethane resin is a synthetic resin having a urethane bond (-NHCOO-). The urethane resin that can be used herein is generally one obtained by a polyaddition reaction of a polyol having two or more active hydrogen groups with a polyisocyanate having two or more isocyanate groups.

Typical examples of such polyols include polyester polyols and polyether polyols. Examples of polyester polyols include polyester compounds having a hydroxyl group at the end obtained by the reaction of low molecular weight polyols, such as ethylene glycol, diethylene glycol, triethylene glycol, 1,2-propylene glycol, 1,3-propylene glycol, neopentyl glycol, 1,2-butylene glycol, 1,3-butylene glycol, 1,4-butylene glycol, 3-methylpentanediol, hexamethylene glycol, hydrogenated bisphenol A, trimethylolpropane, and glycerol; with polybasic acids, such as succinic acid, glutaric acid, adipic acid, sebacic acid, phthalic acid, isophthalic acid, terephthalic acid, trimellitic acid, tetrahydrophthalic acid, endomethylenetetrahydrophthalic acid, and hexahydrophthalic acid.

Moreover, examples of polyether polyols include ethylene oxide and/or propylene oxide high adducts of low molecular weight polyols, such as ethylene glycol, diethylene glycol, triethylene glycol, 1,2-propylene glycol, 1,3-propylene glycol, neopentyl glycol, 1,2-butylene glycol, 1,3-butylene glycol, 1,4-butylene glycol, 3-methylpentanediol, hexamethylene glycol, bisphenol A, hydrogenated bisphenol A, trimethylolpropane, and glycerol; polyether polyols, such as polyethylene glycol, polypropylene glycol, poly(ethylene/propylene) glycol, and polytetramethyl glycol; furthermore, polycarbonate diol, polycaprolactone polyol, polyolefin polyol, and polybutadiene polyol; and the like.

Examples of polyisocyanates include aliphatic, alicyclic, or aromatic polyisocyanates. Specific examples thereof include tetramethylene diisocyanate, hexamethylene diisocyanate, tolidine diisocyanate, hydrogenated xylylene diisocyanate, 1,4-cyclohexylenediisocyanate, 4,4'-dicyclohexylmethane diisocyanate, 2,4'-dicyclohexylmethane diisocyanate, isophorone diisocyanate, 3,3'-dimethoxy-4,4'-biphenylene diisocyanate, 1,5-naphthalene diisocyanate, 1,5-tetrahydronaphthalene diisocyanate, 2,4-tolylene diisocyanate, 2,6-tolylene diisocyanate, 4,4'-diphenylmethane diisocyanate, 2,4'-diphenylmethane diisocyanate, phenylene diisocyanate, xylylene diisocyanate, tetramethylxylylene diisocyanate, and the like.

The urethane resin that is a polyaddition reaction product of such a polyol and a polyisocyanate preferably has a molecular weight, as measured by gel permeation chromatography, of 500 to 500,000. When a urethane resin is formed, a curing agent, a catalyst, etc., are suitably used. Examples of curing agents include diamine based curing agents typified by methylenebis-2-chloroaniline [MOCA]; MOCA alternative diamine based curing agents typified by 4,4'-methylenebis(3-chloro-2,6-diethyl)aniline, 4,4'-methylenebis(N-sec-butylaniline), etc.; and polyhydric alcohol based curing agents typified by 1,4-butanediol-trimethylolpropane combined curing agents. Typical examples of catalysts include dibutyltin dilaurate.

Moreover, examples of phenolic resins include those obtained by a reaction of at least one phenol selected from phenol, cresol, xylenol, and the like, with formaldehyde. Both novolak-type resins and resol-type resins can be used, and their molecular weight is not particularly limited. When a novolak-type resin is used, hexamethylenetetramine or the like is used as a curing agent. In either case, a phenolic resin coating is formed via a drying step.

Examples of silicon-containing compounds include silane coupling agents, colloidal silica, and the like. Preferred examples of silane coupling agents include epoxy group-containing silane coupling agents such as 2-(3,4-epoxycyclohexyl)ethyltrimethoxysilane, 3-glycidoxypropyltrimethoxysilane, 3-glycidoxypropyltriethoxysilane, 3-glycidoxypropylmethyldimethoxysilane, and glycidoxypropyl diethoxysilane. As colloidal silica, a commercial product produced by Nissan Chemical Industries, Ltd., such as Snowtex MEK-ST (methyl ethyl ketone dispersion), Snowtex IPA-ST (isopropyl alcohol dispersion), Snowtex EG-ST (ethylene glycol dispersion), or Snowtex MIBK-ST (methyl isobutyl ketone dispersion); or methanol silica sol can be used as they are.

The urethane resin or phenolic resin and the silicon-containing compound are used in a way that the ratio of the resin component as a binder component is about 45 to 90 wt.%, preferably about 50 to 88 wt.%, and the ratio of the silicon-containing compound is about 55 to 10 wt.%, preferably about 50 to 12 wt.%, based on the total amount of these components. When the amount of the silicon-containing compound is less than this range, LLC resistance is deteriorated, whereas when the amount of the silicon-containing compound is greater than this range, heat resistance is deteriorated.

Examples of fluorine-free zirconium compounds include zirconium compounds containing no fluorine such as zirconium lactate, ammonium zirconium lactate, zirconium sulfate, zirconium oxysulfate, ammonium zirconium sulfate, zirconium nitrate, zirconium oxynitrate, ammonium zirconium nitrate, zirconium acetate, zirconium chloride, and ammonium zirconium carbonate. Of these, ammonium zirconium lactate and ammonium zirconium nitrate are preferably used. At least one of these zirconium compounds is used in a way that its content as metal Zr is 1 to 20 wt.%, preferably 1 to 15 wt.%.

Examples of the fluorine-free titanium compound include titanium compounds containing no fluorine, such as titanium lactate, ammonium titanium lactate, titanium sulfate, titanium oxysulfate, ammonium titanium sulfate, titanium nitrate, titanium oxynitrate, and ammonium titanium nitrate; preferably ammonium titanium lactate and ammonium titanium nitrate are used. At least one of these titanium compounds is used in a way that its content as metal Ti is 1 to 20 wt.%, preferably 1 to 15 wt.%.

The surface-treating agent comprising the above essential components is used in a way that the amount of the fluorine-free zirconium compound or fluorine-free titanium compound is 0.2 to 8.0 times, preferably 0.25 to 7.5 times in terms of weight as much as the total amount of the urethane resin or phenolic resin and the silicon-containing compound. When the amount of the fluorine-free zirconium compound or fluorine-free titanium compound is less than this range, LLC resistance is reduced. In contrast, when the amount of the fluorine-free zirconium compound or fluorine-free titanium compound is greater than this range, oil resistance is reduced. In addition, the amount of the resin component as a binder component decreases to thereby facilitate the removal of the coating, which is not preferable in terms of process. The surface-treating agent is diluted with water to a solid matters content of 0.5 to 3.0 wt.%, and dispersed by a homogenizer, etc. Then, the surface-treating agent is applied to a metal plate by roll coating, etc., at a desired coating weight (one side base weight), for example, 10 to 2,000 mg/m², preferably 30 to 1,500 mg/m². After drying, baking is performed at 100 to 300°C, thereby forming a coating.

To the layer of the surface treating agent formed on the metal plate, a resin-based vulcanizing adhesive, such as a thermosetting phenolic resin or an epoxy resin, is applied as an adhesive for rubber. As the thermosetting phenolic resin, any thermosetting phenolic resin, such as cresol novolac-type phenolic resin, cresol resol-type phenolic resin, or alkyl-modified phenolic resin, can be used. Moreover, as the epoxy resin, a cresol novolac-type epoxy resin is preferably used. In this case, a bisphenol novolac-type phenolic resin is used as a curing agent, and an imidazole compound is used as a curing catalyst.

Such a resin-based vulcanizing adhesive is generally prepared as an organic solvent solution having a component concentration of about 1 to 5 wt.% using an alcohol-based organic solvent, such as methanol, ethanol, or isopropanol, or a ketone-based organic solvent, such as acetone, methyl ethyl ketone, or methyl isobutyl ketone, singly or as a mixed solvent thereof. The resin-based vulcanizing adhesive is applied by the same coating method as for the surface treating agent so that the coating weight (coating amount) on one surface is 50 to 3,000 mg/m², and dried at room temperature or by hot air, followed by calcination at 100 to 250°C for 1 to 20 minutes.

Then, unvulcanized nitrile rubber compound is applied to the resulting vulcanizing adhesive layers as an organic solvent solution of the rubber compound to form, on both sides, vulcanizate layers having a coating film thickness on one side of about 5 to 120 µm.

The nitrile rubber (NBR) can be used as a compound using a sulfur-based vulcanizing agent, such as sulfur, or tetramethylthiurammonosulfide; however, the nitrile rubber is preferably used as an unvulcanized nitrile rubber compound using an organic peroxide as a crosslinking agent. Formulation examples of such peroxide-crosslinkable unvulcanized nitrile rubber compounds are shown below. The present invention can also be applied to hydrogenated nitrile rubber to be peroxide-crosslinked, as with nitrile rubbers of the following Formulation Examples.

**(Formulation Example I)**

| | |
|---|---|
| NBR (Medium-high nitrile ; N-237, | 100 parts by weight |
| produced by JSR Corporation) | |
| HAF carbon black | 10 parts by weight |
| SRF carbon black | 40 parts by weight |
| Cellulose powder | 10 parts by weight |
| Zinc white | 10 parts by weight |
| Stearic acid | 1 part by weight |
| Microcrystalline wax | 2 parts by weight |
| Antioxidant (ODA-NS, produced by Ouchi Shinko | 4 parts by weight |
| Chemical Industrial Co., Ltd.) | |
| Plasticizers (Vulkanol OT, produced by Bayer) | 5 parts by weight |
| Organic peroxide | 6 parts by weight |
| (Perhexa 25B, produced by NOF Corporation) | |
| N,N-m-phenylenedimaleimide | 1 part by weight |

**(Formulation Example II)**

| | |
|---|---|
| NBR (N-235S, produced by JSR Corporation) | 100 parts by weight |
| SRF carbon black | 80 parts by weight |
| Calcium carbonate | 80 parts by weight |
| Silica powder | 20 parts by weight |
| Zinc oxide | 5 parts by weight |
| Antioxidant (Nocrac 224, produced by Ouchi Shinko | 2 parts by weight |
| Chemical Industrial Co., Ltd.) | |
| Triallyl isocyanurate | 2 parts by weight |
| 1,3-bis(tert-butylperoxy)isopropyl benzene | 2.5 parts by weight |
| Plasticizers (Vulkanol OT, produced by Bayer) | 5 parts by weight |

The coated unvulcanized rubber layers are dried, for example, at room temperature to about 100°C for about 1 to 15 minutes to evaporate off alcohols such as methanol, ethanol, etc., ketones such as methyl ethyl ketone, methyl isobutyl ketone, etc., aromatic hydrocarbons such as toluene, xylene, etc., or a mixture thereof, used as an organic solvent, followed by vulcanization by heating at about 150 to 230°C for about 0.5 to 45 minutes. On this occasion, the vulcanization is performed while pressurizing, if necessary. The vulcanized rubber layers desirably have, for example, a hardness (Durometer A) of 80 or more, and a compression set (100°C for 22 hours) of 50% or less from the viewpoint of use as a gasket, without any particular limitation by formulation contents so long as the desired properties are satisfied. Further, in case sticking prevention is required, an anti-sticking agent can be applied to the surfaces.

The anti-sticking agent is used to prevent sticking between rubbers themselves or between the rubber and the metal. Any anti-sticking agent can be used, so far as it can form a film layer on the vulcanized rubber layers, and includes, for example, silicone series, fluorine series, graphite series, wax series such as amides, paraffins, etc., polyolefin series, or polybutadiene series, and preferably an anti-sticking agent comprising a dispersion in an organic solvent of liquid 1,2-polybutadiene hydroxyl group-containing material, 1,2-polybutadiene isocyanate group-containing material, and polyolefin-based resin is used (Patent Literature 5).

### EXAMPLES

The following describes the present invention with reference to Examples.

### Examples 1 to 17 and Comparative Examples 1 to 5

Both sides of an SPCC steel plate (thickness: 0.25 mm) were subjected to surface roughening and alkaline degreasing. A surface-treating agent was prepared by compounding a urethane resin (CORONATE 3015E, produced by Nippon Polyurethane Industry Co., Ltd.) or a novolak-type phenolic resin (PS-4271, produced by Gun Ei Chemical Industry Co., Ltd; using hexamethylenetetramine as a curing agent); colloidal silica (Snowtex MEK-ST, produced by Nissan Chemical Industries, Ltd.); and a fluorine-free zirconium compound (Orgatics ZC-300, produced by Matsumoto Fine Chemical Co. Ltd.; zirconium lactate ammonium salt; Zr content: 2.7 wt.%) or a fluorine-free titanium compound (Orgatics TC-300, produced by Matsumoto Fine Chemical Co. Ltd.; titanium lactate ammonium salt; Ti content: 6.5 wt.%) so that the ratio by weight of the components after drying satisfied the predetermined ratio shown below. The surface-treating agent was diluted with water to a solid matters content of 1.2%, and uniformly dispersed by a homogenizer. Then, the surface-treating agent was applied to both sides of the steel plate by a roll coat method at a predetermined coating weight (one side base weight), and then dried in an oven furnace at 100°C for 1 minute. Table 1 below shows the ratio by weight after drying and the base weight of the components.

**Table 1**

| | Ratio by weight after drying | | | | | |
|---|---|---|---|---|---|---|
| Surface-treating agent | Urethane resin | Phenolic resin | Colloidal silica | Fluorine-free Zr compound | Fluorine-free Ti compound | Base weight (mg/m²) |
| A | 88 | | 12 | 100 | | 200 |
| B | 70 | | 30 | 100 | | 200 |
| C | 70 | | 30 | | 100 | 200 |
| D | 50 | | 50 | 100 | | 200 |
| E | | 88 | 12 | 100 | | 200 |
| F | | 70 | 30 | 100 | | 200 |
| G | | 70 | 30 | | 100 | 200 |
| H | | 50 | 50 | 100 | | 200 |
| I | 88 | | 12 | 25 | | 200 |
| J | 88 | | 12 | 400 | | 200 |
| K | 88 | | 12 | | 400 | 200 |
| L | 88 | | 12 | 200 | 200 | 200 |
| M | 88 | | 12 | | 750 | 200 |
| N | 88 | | 12 | 25 | | 30 |
| O | 88 | | 12 | 25 | | 1500 |
| P | 95 | | 5 | 100 | | 200 |
| Q | 40 | | 60 | 100 | | 200 |
| R | 88 | | 12 | | | 200 |
| S | 88 | | 12 | 10 | | 200 |
| T | 88 | | 12 | 1000 | | 200 |

Next, a vulcanizing adhesive solution A or B having the following composition was applied by roll coating so that the coating amount on one surface was 2,000 mg/m², and calcined in an oven furnace at 200°C for 5 minutes.

**[Vulcanizing adhesive solution A]**

| | |
|---|---|
| Novolak-type phenolic resin | 100 parts by weight |
| (Resitop PSF-2803, produced by Gun Ei Chemical Industry Co., Ltd) | |
| Resol-type phenolic resin (30 wt.% methanol solution) | 150 parts by weight |
| (Resitop PL-2208, produced by Gun Ei Chemical Industry Co., Ltd) | |
| Nitrile rubber compound of Formulation Example I | 133 parts by weight |
| (25 wt.% toluene-methyl ethyl ketone mixed solvent solution) | |
| Methyl ethyl ketone | 3,182 parts by weight |

**[Vulcanizing adhesive solution B]**

| | |
|---|---|
| Resol-type phenol resin (30 wt.% methanol solution) | 150 Parts by weight |
| (Resitop PL-2208) | |
| o-Cresol novolak-type epoxy resin (Epikote 180S, produced by Japan Epoxy Resin Co.) | 18 Parts by weight |
| 2-ethyl-4-methylimidazole | 0.9 Parts by weight |
| Nirile rubber compound of the afore-mentioned | 96 Parts by weight |
| Formulation Example II | |
| (25 wt.% toluene-methyl ethyl ketone mixed solvent solution) | |
| Methyl ethyl ketone | 7,631 Parts by weight |

To the thus-formed vulcanizing adhesive layer, a 25 wt.% methyl ethyl ketone solution of a nitrile rubber compound comprising Formulation Example I or II above was uniformly applied using a knife coater so that the thickness after drying on one surface was 65 µm. After the solvent was dried at room temperature, heat treatment in an oven furnace was performed at 160°C for about 30 minutes to form a nitril rubber layer. Thus, a nitrile rubber-metal laminated plate was obtained.

The LLC resistance, oil resistance, and heat resistance of the obtained nitrile rubber-metal laminated plates were ranked by evaluating the adhesion after dipping or exposure under the following conditions. The adhesion was evaluated according to JIS K6894 by performing a spiral scoring test in which a spiral with a radius of 4.5 mm was drawn 25 times on a sample surface.
LLC resistance: The plates were dipped in a dipping liquid of commercially available LLC (JCC310, produced by Japan Chemical Industries Co., Ltd.) and water at a volume ratio of 1:1 at 120°C for 500 hours
Oil resistance: The plates were dipped in polyalkylene glycol oil (Daphne Hermetic Oil NF, produced by Idemitsu Kosan Co., Ltd.) at 120°C for 500 hours
Heat resistance: The plates were exposed in a thermostat tank at 120°C for 500 hours

### [Adhesion evaluation criteria]

5: The rubber layer completely remains
4: Part of the rubber layer is removed
3: About half of the rubber layer is removed
2: The rubber layer slightly remains
1: The rubber layer is completely removed

Table 2 below shows the obtained results, together with the type of surface-treating agent, vulcanizing adhesive, and rubber compound.

**Table 2**

| Example | Surface-treating agent | Vulcanizing adhesive | Rubber compound | LLC resistance | Heat resistance | Oil resistance |
|---|---|---|---|---|---|---|
| Ex. 1 | A | A | I | 5 | 5 | 5 |
| Ex. 2 | B | A | I | 5 | 5 | 5 |
| Ex. 3 | C | A | I | 5 | 5 | 5 |
| Ex. 4 | D | A | I | 5 | 5 | 5 |
| Ex. 5 | E | A | I | 5 | 5 | 5 |
| Ex. 6 | F | A | I | 5 | 5 | 5 |
| Ex. 7 | G | A | I | 5 | 5 | 5 |
| Ex. 8 | H | A | I | 5 | 5 | 5 |
| Ex. 9 | I | A | I | 5 | 5 | 5 |
| Ex. 10 | J | A | I | 5 | 5 | 5 |
| Ex. 11 | K | A | I | 5 | 5 | 5 |
| Ex. 12 | L | A | I | 5 | 5 | 5 |
| Ex. 13 | M | A | I | 5 | 5 | 5 |
| Ex. 14 | N | A | I | 5 | 5 | 5 |
| Ex. 15 | O | A | I | 5 | 5 | 5 |
| Comp Ex. 1 | P | A | I | 2 | 4 | 5 |
| Comp Ex. 2 | Q | A | I | 5 | 5 | 1 |
| Comp Ex. 3 | R | A | I | 1 | 2 | 4 |
| Comp Ex. 4 | S | A | I | 2 | 2 | 5 |
| Comp Ex. 5 | T | A | I | 5 | 1 | 5 |
| Ex. 16 | J | B | I | 5 | 5 | 5 |
| Ex. 17 | J | A | II | 5 | 5 | 5 |

### INDUSTRIAL APPLICABILITY

The nitrile rubber-metal laminated gasket material of the present invention has excellent LLC resistance and oil resistance under high temperature, although it uses a surface-treating agent for metal, which is free from chromium and fluorine. Therefore, the nitrile rubber-metal laminated gasket material of the present invention can be effectively used as a gasket material, such as engine cylinder head gasket material.

## Claims

1. A nitrile rubber-metal laminated gasket material comprising a surface-treating agent layer, an adhesive layer, and a rubber layer, which are sequentially laminated on a metal plate, wherein the surface-treating agent layer is formed using a surface-treating agent that is free from chromium and comprises of (A) a urethane resin or phenolic resin, (B) a silicon-containing compound, and (C) a fluorine-free zirconium compound or fluorine-free titanium compound as essential components.

2. The nitrile rubber-metal laminated gasket material according to claim 1, which uses a surface-treating agent in which, based on the total amount of the urethane resin or phenolic resin as component (A) and the silicon-containing compound as component (B), the ratio of component (A) is 45 to 90 wt.%, and the ratio of component (B) is 55 to 10 wt.%.

3. The nitrile rubber-metal laminated gasket material according to claim 1, which uses a surface-treating agent in which the amount of the fluorine-free zirconium compound or fluorine-free titanium compound as component (C) is 0.2 to 8.0 times in terms of weight as much as the total amount of the urethane resin or phenolic resin as component (A) and the silicon-containing compound as component (B).

4. The nitrile rubber-metal laminated gasket material according to claim 1, wherein the silicon-containing compound as component (B) is a silane coupling agent or colloidal silica.

5. The nitrile rubber-metal laminated gasket material according to claim 1, wherein the metal plate is subjected to surface roughening treatment and alkaline degreasing treatment.

6. The nitrile rubber-metal laminated gasket material according to any one of claim 1, 2, 3, 4 or 5, which is used as an engine cylinder head gasket.

7. An engine cylinder head gasket comprising the nitrile rubber-metal laminated gasket material according to claim 6.
